# EUROPÄISCHE PATENTSCHRIFT

(11) **EP 1 776 539 B1**
(45) Veröffentlichungstag und Bekanntmachung des Hinweises auf die Patenterteilung: **23.04.2008**
(21) Anmeldenummer: 05777876.3
(22) Anmeldetag: 08.08.2005
(51) Int. Cl.: F16L 19/10

(54) **METALLISCHER SCHNEIDRING**
METAL OLIVE
BAGUE COUPANTE METALLIQUE

(30) Priorität: 10.08.2004 DE 202004012473 U
(43) Veröffentlichungstag der Anmeldung: 25.04.2007
(60) Teilanmeldung: 08152465.4
(73) Patentinhaber: VOSS Fluid GmbH, 51688 Wipperfürth (DE)
(72) Erfinder: POTT, Harald, 42499 Hückeswagen (DE); SCHMIDT, Harald, 51688 Wipperfürth (DE)
(74) Vertreter: Patentanwälte Dr. Solf & Zapf
(86) Internationale Anmeldenummer: PCT/EP2005/053899
(87) Internationale Veröffentlichungsnummer: WO 2006/018407

(56) Entgegenhaltungen:
- DE-B- 1 167 608
- DE-B- 1 175 639
- GB-A- 1 117 987
- US-A- 2 406 488

## Beschreibung

Die vorliegende Erfindung betrifft einen metallischen Schneidring für eine Schraubverbindung zum abdichtenden Verbinden eines Rohres mit einem Anschlussteil, mit einem Rohranlageabschnitt und einem sich in axialer Richtung an den Rohranlageabschnitt anschließenden Schneidenabschnitt, wobei der Schneidenabschnitt einen vom äußeren Umfang des Schneidringes radial nach außen weisenden Anschlag mit einer quer zur Schneidring-Längsachse verlaufenden Anschlagfläche für das Anschlussteil aufweist.

Schraubverbindungen mit ähnlichen Ringen sind aus der DE-AS 1 167 608, der DE-AS 1 175 639, der GB 1 117 987 A und aus der US 2 406 488 bekannt, bei denen sich jedoch sämtlich der Anschlag für das Anschlagteil an der Stirnseite des Schneidringes befindet.

So ist in der DE-AS 1 167 608 eine Anschlussverschraubung für Rohre beschrieben, die einesteils aus einem Anschlussstück besteht, das eine senkrecht zur Rohrachse verlaufende Stirnfläche und eine ebenso verlaufende Ringfläche zum Abstützen des Rohrendes aufweist. Des Weiteren besteht die bekannte Verschraubung anderenteils aus einer das Rohrende umfassenden und auf das Anschlussstück aufschraubbaren Überwurfmutter sowie aus einem auf dem Rohrende angeordneten gehärteten Dichtring, der sich beim Abziehen der Überwurfmutter mit einer radial nach innen gerichteten, im Bereich seines hinteren Ende angeordneten Schneidkante in die Rohraußenfläche und mit seiner stirnseitiges Ringschneide, die auch als Anschlag aufgefaßt werden könnte, in die Stirnfläche des Anschlussstückes eingräbt, wobei der an die stirnseitige Ringschneide anschließende Teil des Dichtungsringes außen durch die Wandung der an der Stirnfläche anschließenden zylindrischen Bohrung und innen durch die Außenfläche des Rohrendes mit geringem Spiel geführt ist.

Die DE-AS 1 175 639 beschreibt ein Verfahren zum Herstellen eines Dichtringes von Rohrverbindungen, welche zwischen dem Aufnahmekonus eines Anschlussstückes und einem damit zusammenwirkenden Anpressstück beim axialen Verschieben desselben mit einer harten Schneidkante in den Außenmantel des anzuschließenden Rohres einschneidet, wobei das Vorderteil des Dichtringes mittels sich drehender Walzen aus einer zylindrischen in eine kegelige Form überführt wird, bis sich eine die äußere Kante des Vorderteils überragende Nase bildet.

Die GB 1 117 987 A beschreibt eine Rohrkupplung, mit der beim Anschließen eines Rohres eine Aufweitung des Rohrendes erzielt werden kann. Diesem Zweck dient unter anderem ein als "tube-flaring sleeve" bezeichneter Ring, der mit einer radial nach innen gerichteten Schneidkante das aufzuweitende Rohr an seinem Außenumfang festhält, wenn dessen Ende beim Anschließen gegen einen konischen, als "flaring member" bezeichneten zentrisch angeordneten Aufweitungskörper drückt. Stirnseitig kommt die Rohraufweitung dabei an einer radial außen liegenden konischen Fläche einer Gegenbohrung zur Anlage. Der Ring weist stirnseitig an einem, dem Aufweitungskörper und der Gegenbohrung zugewandten Ende eine radiale Schneide und axial nach außen und nach innen gerichtete Schrägflächen mit unterschiedlichen Fasenwinkeln auf, die an die konischen Flächen von Aufweitungskörper und Gegenbohrung angepaßt sind.

Aus der US 2 406 488 ist eine Rohrverbindung mit einem Schneidring bekannt, der einen radial schräg nach innen zeigenden Flansch aufweist, welcher beim Verschrauben durch ein an ihm anliegendes Anschlusstück aus, seiner ursprünglichen Schräglage in eine nahezu senkrecht zur Längsachse der Verbindung ausgerichtete Position zurückgebogen wird und dabei in den Mantel des zu verbindenden Rohres einschneidet. Der Schneidring weist außerdem an seiner Stirnfläche - außenseitig neben dem Flansch - eine axial gerichtete ringförmige Rippe auf, die beim Verschrauben als Anschlag an dem Anschlussstück zur Anlage kommt und dadurch die Biegebewegung des Flansches stoppt.

Ein metallischer Schneidring, welcher der eingangs genannten Art entspricht, ist aus der DE 33 41 726 A1 bekannt. Dieses Dokument beschreibt eine Schraubverbindung für das abdichtende Verbinden eines Rohres mit einem Rohrverbindungsteil oder Einschraubteil, bestehend aus einem Körper, der eine von einer Stirnfläche ausgehende sich kegelig zum Inneren des Körpers hin kontinuierlich verjüngende Bohrung aufweist, einer auf den Körper aufschraubbaren Mutter, die eine kegelig von dem Körper weg sich verjüngende Bohrung aufweist, und einem an seinem dem Körper zugewandten Ende mit mehreren radial nach innen gerichteten Schneiden versehenen Zwischenring, der zwischen der körperseitigen kegeligen Bohrung und der mutterseitigen kegeligen Bohrung verspannt gehalten ist. Dabei soll die Aufgabe gelöst werden, mit dem Zwischenring einen Schneidring zu schaffen, der bei hoher axialer Steifigkeit in radialer Richtung eine geringe Formänderungsarbeit aufweist. Dies wird dadurch erreicht, dass gleichmäßig auf dem Umfang eines Massivbereiches des Schneidringes verteilt, axial gerichtete Rippen angeordnet sind. Durch eine gezielte Ausbildung der Rippen kann dem Schneidring ein den jeweiligen Anforderungen angepaßtes elastisches Verhalten eingeprägt werden. Um des Weiteren zu erreichen, dass die Beendigung des Montagevorganges dem Montagepersonal definiert angezeigt wird, ist vorgesehen, dass mutterseitige kegelige Anschlagflächen des Massiv- und des Rippenbereiches in definierter Weise gegeneinander versetzt gehalten sind. Bei dem bekannten Schneidring ist am mutterseitigen Ende eine Ringwulst vorgesehen, an der sich außenseitig die Rippen befinden und in deren Bereich ein Rohranlageabschnitt gebildet ist, indem eine Innenmantelfläche dieses Bereiches die Außenmantelfläche des zu verbindenden Rohres formschlüssig umschließt.

An den Rohranlageabschnitt schließt sich in axialer Richtung auf den Körper hin ein Schneidenabschnitt an, der einen vom äußeren Umfang des Schneidringes radial nach außen weisenden, quer zur Schneidring-Längsachse verlaufenden Anschlag für das Anschlussteil aufweist. In einer Ausführungsform verläuft dabei eine Anschlagfläche des Anschlags rechtwinklig zur Längsachse des Ringes, in einer weiteren Ausführungsform schräg zur Längsachse des Ringes und geht jeweils in die genannten noch weiter radial außen liegenden Rippen über. Die Anschlagfläche wirkt bei einem Anziehen der Mutter als Anzugsbegrenzung, d.h. bei fester Anlage der Anschlagfläche an dem Anschlussteil erfährt das Anzugsdrehmoment eine sprunghafte Erhöhung, was das Ende des Montagevorgang anzeigt.

Im Gegensatz zur DE-AS 1 167 608, bei der der Schneidring federnd zwischen der Überwurfmutter und dem Anschlussstück gehalten ist und bei dem die Schneidkante für das Rohr nicht in einem vorderen, dem Anschlussstück zugekehrten Bereich angeordnet werden kann, gestattet der Schneidring gemäß der DE 33 41 726 A1, welcher der eingangs genannten Art entspricht, eine Anzugsbegrenzung bei der Montage, die als eine sogenannte Blockmontage durchgeführt werden kann, und die Anordnung einer zusätzlichen Dichtkante im vorderen Ringbereich.

Der vorliegenden Erfindung liegt die Aufgabe zugrunde, einen metallischen Schneidring der eingangs genannten Art zu schaffen, der sich bei hoher Dichtungswirkung durch eine verbesserte Montagefreundlichkeit und damit kostengünstigere Herstellungsweise der Verschraubung auszeichnet.

Erfindungsgemäß wird dies durch einen Schneidring mit den Merkmalen des Anspruchs 1 erreicht, bei dem der Anschlag für das Anschlussteil eine gegenüber der Anschlagfläche hervorstehende, ringförmig umlaufende Anschlagkante aufweist.

Bei Wahrung aller Vorteile des bekannten gattungsgemäßen Schneidringes ist es durch diese erfindungsgemäße Ausführung zunächst möglich, eine Schraubverbindung zum abdichtenden Verbinden eines Rohres mit einem Anschlussteil zu schaffen, die eine erhöhte Funktionalität aufweist, da die gegenüber der Anschlagfläche hervorstehende, ringförmig umlaufende Anschlagkante eine zusätzliche Dichtkante bildet Des Weiteren gelingt es erfindungsgemäß, den Montageaufwand bei der Herstellung der Schraubverbindung zu senken, indem durch die Anschlagkante, welche leichter deformierbar als die Anschlagfläche ist, ein Toleranzausgleich im Hinblick auf die axialen Längenmaße des Ringes bzw. des Anschlussteils geschaffen wird.

Weitere vorteilhafte Ausgestaftungsmerkmale der Erfindung sind im Unteranspruch sowie der folgenden Beschreibung enthalten.

Anhand eines in der Zeichnung dargestellten, bevorzugten Ausführungsbeispiels soll die Erfindung genauer erläutert werden. Dabei zeigen:
- Fig. 1: einen axialen Halbschnitt durch eine Schraubverbindung mit einem erfindungsgemäßen metallischen Schneidring,
- Fig. 2: in vergrößerter Darstellung gegenüber Fig. 1, einen axialen Längsschnitt durch den erfindungsgemäßen metallischen Schneidring,
- Fig.3: in vergrößerter Darstellung gegenüber Fig. 2, eine in Fig. 2 mit X bezeichnete Einzelheit.

In den verschiedenen Figuren der Zeichnung sind gleiche und einander entsprechende Teile stets mit denselben Bezugszeichen versehen und werden daher in der Regel auch jeweils nur einmal beschrieben.

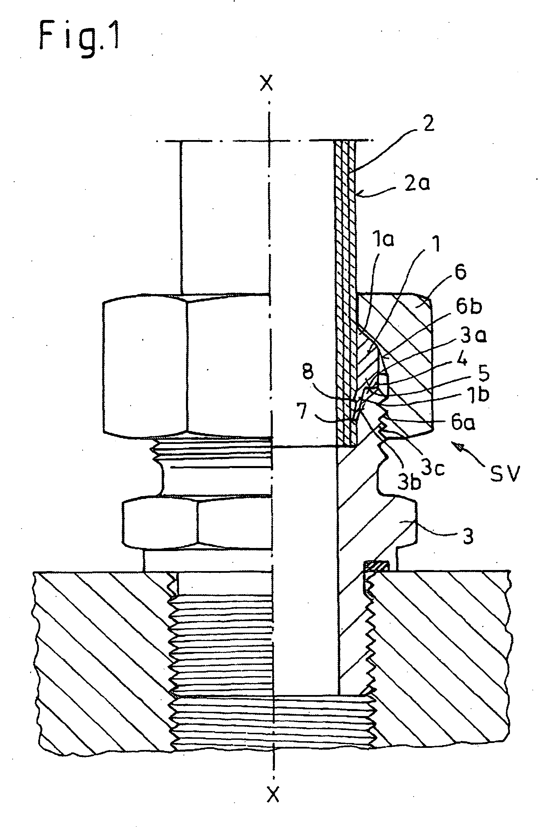

Wie sich zunächst aus Fig. 1 - die jedoch die Erfindung nicht im Detail zeigt - ergibt, ist ein erfindungsgemäßer metallischer Schneidring 1 zur Verwendung für eine Schraubverbindung SV zum abdichtenden Verbinden eines Rohres 2 mit einem Anschlussteil 3, wie einem Stutzen oder einem Einschraubteil, bestimmt.

Der Schneidring 1 weist einen Rohranlageabschnitt 1a und einen sich in axialer Richtung an den Rohranlageabschnitt 1a anschließenden Schneidenabschnitt 1b auf, wobei der Schneidenabschnitt 1b einen vom äußeren Umfang des Schneidringes 1 radial nach außen weisenden Anschlag 4 mit einer quer zur Schneidring-Längsachse X-X verlaufenden Anschlagfläche 5 für das Anschlussteil 3, insbesondere für eine Stirnfläche 3a des Anschlussteils 3, aufweist

Das Anschlussteil 3 ist mit einer axial verlaufenden kegeligen Bohrung 3b versehen, in die der Schneidring 1 teilweise, d.h. mit seinem Schneidenabschnitt 1b, eingreift Eine auf das mit einem Außengewinde 3c versehene Anschlussteil 3 aufschraubbare Mutter 6 ist - anschließend an ihre Gewindebohrung 6a - ebenfalls mit einer kegeligen Bohrung 6b versehen. Der Schneidring 1 wird dabei - im Bereich seines Schneidenab schnitts 1b- zwischen der kegeligen Bohrung 3b des Anschlussteils 3 und - im Bereich seines Rohranlageabschnitts 1a - der kegeligen Bohrung 6b der Mutter 6 verspannt

An seiner dem Anschlussteil 3 zugewandten Seite, d.h. in seinem Schneidenabschnitt 1b, ist der Schneidring 1 mit Schneiden 7, 8, insbesondere zwei Schneiden 7, 8, versehen, die sich bei Anzug der Mutter 6 unter der Wirkung der kegeligen Bohrung 3b des Anschlussteils 3 bis zum Anschlagen am Anschlag 4 axial auf das Anschlussteil 3 zu schieben und gleichzeitig radial in die Wandung 2a des zu verbindenden Rohres 2 einschneiden.

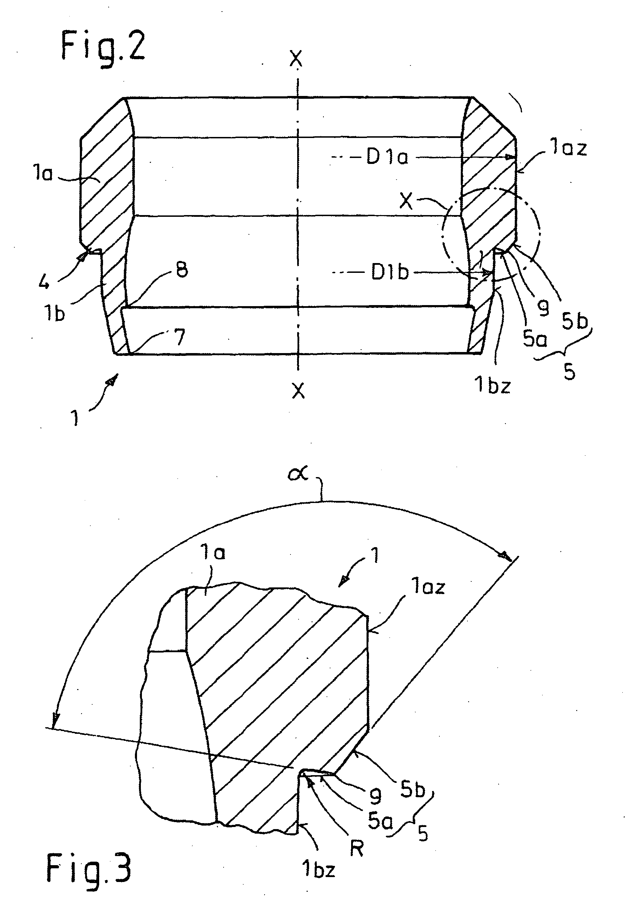

Der Anschlag 4 mit seiner quer zur Schneidring-Längsachse verlaufenden, sich radial erstreckenden Anschlagfläche 5 auf der dem Anschlussteil 3 zugewandten Seite wirkt beim Anziehen der Mutter 6 als Anzugsbegrenzung, d.h., bei fester Anlage der Anschlagfläche 5 erfährt ein zum Anziehen aufzubringendes Drehmoment eine sprunghafte Erhöhung. Erfindungsgemäß ist dabei vorgesehen, dass der Anschlag 4 für das Anschlussteil 3 eine gegenüber der Anschlagfläche 5 hervorstehende, ringförmig umlaufende Anschlagkante 9 aufweist, die in Fig. 1 nicht erkennbar, jedoch den vergrößerten Darstellungen des Schneidrings 1 in Fig. 2 und 3 zu entnehmen ist. Die Anschlagkante 9 stellt - wie bereits erwähnt - eine zusätzliche Dichtkante dar und begünstigt bei der Montage den Toleranzausgleich, insbesondere in Richtung der Längsachse X-X.

Auf der Seite der Mutter 6 stützt sich der Schneidring 1 mit seinem ringwulstartig und bevorzugt außenseitig ebenfalls konisch ausgebildeten Rohranlageabschnitt 1a außenseitig an der Mutter 6 und innenseitig auf dem Rohr 2 ab. Durch die formschlüssige Anlage an der Wandung 2a des Rohres 2 wird dabei gewährleistet, dass am Rohr 2 keine Kerbwirkungen auftreten, die die Festigkeit des Rohres 2 herabsetzen könnten.

Wie Fig. 2 und noch deutlicher Fig. 3 veranschaulichen, ist gemäß der Erfindung vorgesehen, dass die Anschlagkante 9 die Anschlagfläche 5 in zwei - eine innere und eine äußere - ringförmige, konzentrisch zueinander angeordnete Teilflächen 5a, 5b unterteilt, wobei die Teilflächen 5a, 5b insbesondere eine unterschiedliche Neigung zur Schneidring-Längsachse X-X aufweisen. Hierdurch kann der Anschlagkante 9 bei hoher Stabilität und Festigkeit eine im Hinblick auf das Anschlagen und das dabei erfolgende Abdichten optimale Konturgestaltung verliehen werden.

Fig. 3 zeigt insbesondere, dass die innere Teilfläche 5a sich in Richtung auf das Anschlussteil 3 hin konisch erweitert, während die äußere Teilfläche 5b sich in Richtung auf das Anschlussteil 3 hin konisch verjüngt, so dass zwischen den Teilflächen 5a, 5b ein stumpfer Winkel α eingeschlossen ist Durch die Wahl dieses Winkels α kann das Andruckverhalten der Anschlagkante 9 an der Stirnfläche 3a des Anschlussteils 3, z.B. der Anstieg des Anzugsmoments nach Erreichen des Anschlags 4, in vorbestimmter Weise festgelegt werden.

Insbesondere was die Neigung der inneren Teilfläche 5a zur Schneidring-Längsachse X-X betrifft, so kann diese nur wenig, insbesondere weniger als die Neigung der äußeren Teilfläche 5b, z.B. maximal um bis zu 25°**,** bevorzugt um weniger als 15°, von einem rechtwinkligen Verlauf abweichen. Hierbei kann an einer Kehle, die durch einen Rücksprung des Außendurchmessers D1a eines vorzugsweise zylindrisch gestalteten Bereichs 1az der Außenkontur des Rohranlageabschnitts 1a gegenüber dem Außendurchmesser D1b eines vorzugsweise ebenfalls zylindrisch gestalteten Bereichs 1bz der Außenkontur des Schneidenabschnitts 1b entsteht, eine Verrundung R vorgesehen sein, was zu einer Optimierung des Verlaufes der mechanischen Spannungen im montierten Schneidring 1 führt.

### Bezugszeichen

- 1: Schneidring
- 1a: Rohranlageabschnitt von 1
- 1b: Schneidenabschnitt von 1
- 1az: zylindrischer Bereich von 1a
- 1bz: zylindrischer Bereich von 1b
- 2: Rohr
- 2a: Wandung von 2
- 3: Anschlussteil
- 3a: Stirnfläche von 3
- 3b: kegelige Bohrung in 3
- 3c: Außengewinde von 3
- 4: Anschlag an 1
- 5: Anschlagfläche von 4
- 5a: innere Teilfläche von 5
- 5b: äußere Teilfläche von 5
- 6: Mutter
- 6a: Gewindebohrung in 6
- 6b: kegelige Bohrung in 6
- 7, 8: Schneiden von 1
- 9: Anschlagkante von 4

- D1a: Außendurchmesser von 1az
- D1b: Außendurchmesser von 1bz
- R: Verrundung
- SV: Schraubverbindung aus 1, 2, 3
- X-X: Längsachse von 1, SV

- α: Winkel zwischen 5a und 5b

## Patentansprüche

1. Metallischer Schneidring (1) für eine Schraubverbindung (SV) zum abdichtenden Verbinden eines Rohres (2) mit einem Anschlussteil (3), mit einem Rohranlageabschnitt (1a) und einem sich in axialer Richtung an den Rohranlageabschnitt (1a) anschließenden Schneidenabschnitt (1b) mit im Wesentlichen zylindrischer Außenkontur, die durch einen Außendurchmesser (D1b) des Schneidenabschnitts (1b) beschrieben ist, wobei der Schneidenabschnitt (1b) auf seiner dem Anschlussteil (3) zugewandten Seite Schneiden (7, 8) und auf seiner dem Rohranlageabschnitt (1a) zugewandten Seite einen, von dem durch den Außendurchmesser (D1b) beschriebenen Umfang des Schneidringes (1) radial nach außen weisenden Anschlag (4) mit einer quer zur Schneidring-Längsachse (X-X) verlaufenden Anschlagfläche (5) für das Anschlussteil (3) aufweist, **dadurch gekennzeichnet, dass** die Anschlagfläche (5) aus zwei ringförmigen, konzentrisch zueinander angeordneten Teilflächen (5a, 5b) besteht, die eine unterschiedliche Neigung zur Schneidring-Längsachse (X-X) aufweisen, wobei eine innere Teilfläche (5a) sich in Richtung auf das Anschlussteil (3) hin konisch erweitert und eine äußere Teilfläche (5b) sich in Richtung auf das Anschlussteil (3) hin konisch verjüngt und die Teilflächen (5a, 5b) durch eine vorstehende, ringförmig umlaufende Anschlagkante (9) voneinander abgeteilt sind.

2. Schneidring nach Anspruch 1,
**dadurch gekennzeichnet, dass** die Neigung der inneren Teilfläche (5a) zur Schneidring-Längsachse (X-X) maximal um bis zu 25°, insbesondere um weniger als 15°, von einem rechtwinkligen Verlauf zur Schneidring-Längsachse (X-X) abweicht.

## Claims

1. A metal olive (1) for a screw connection (SV) for the sealed connection of a pipe (2) to a connecting part (3), having a pipe abutment portion (1a) and a cutting portion (1b), adjoining the pipe abutment portion (1a) in an axial direction, of substantially cylindrical external contour described by an external diameter (D1b) of the cutting portion (1b), the cutting portion (1b) having cutting edges (7, 8) on its side facing the connecting part (3) and on its side facing the pipe abutment portion (1a) having a stop (4) which is directed radially outwards from the circumference, described by the external diameter (D1b), of the olive (1) and which has a stop face (5), running transversely to the longitudinal axis (X-X) of the olive (1), for the connecting part (3), **characterised in that** the stop face (5) is composed of two annular partial faces (5a, 5b) arranged concentric to one another and having a different inclination to the longitudinal axis (X-X) of the olive (1), an inner partial face (5a) widening conically in the direction of the connecting part (3) and an outer partial face (5b) tapering conically in the direction of the connecting part (3) and the partial faces (5a, 5b) being separated from one another by a projecting, annularly circumferential stop edge (9).

2. An olive according to claim 1, **characterised in that** the inclination of the inner partial face (5a) to the longitudinal axis (X-X) of the olive (1) differs from a right-angle course to the longitudinal axis (X-X) of the olive (1) by at most up to 25°, in particular by less than 15°.

## Revendications

1. Bague (1) métallique pour un assemblage vissé (SV) pour 1a liaison étanche d'un tuyau (2) avec une partie de raccordement (3), cette bague comprenant une section tubulaire (1a) et une section effilée (1b) se raccordant dans le sens radial à la section tubulaire (1a) avec un contour extérieur sensiblement cylindrique, qui est décrit par un diamètre extérieur (D1b) de la section effilée (1b), la section effilée (1b) présentant sur son côté tourné vers la partie de raccordement (3) des arêtes (7, 8) et sur son côté tourné vers la section tubulaire (1a) une butée (4) dirigée radialement vers l'extérieur depuis le pourtour, décrit par le diamètre extérieur (D1b), de la bague (1), une surface de butée (5) étant agencée transversalement à l'axe longitudinal (X-X) de la bague pour la partie de raccordement (3),
**caractérisée en ce que** la surface de butée (5) est constituée de deux surfaces partielles (5a, 5b) de forme annulaire, disposées de façon concentrique entre elles, qui présentent une inclinaison différente par rapport à l'axe longitudinal (X-X)de la bague, une surface partielle (5a) intérieure s'élargissant à la façon d'un cône en direction de la partie de raccordement (3) et une surface partielle (5b) extérieure se rétrécissant de la façon d'un cône en direction de la partie de raccordement (3) et les surfaces partielles (5a, 5b) étant divisées et séparées l'unes de l'autre par une arête de butée (9) circulaire en forme de bague et saillante.

2. Bague selon la revendication 1,
**caractérisée en ce** l'inclinaison de la surface partielle (5a) intérieure par rapport à l'axe longitudinal (X-X) de la bague s'écarte au maximum d'une valeur allant jusqu'à 25°, en particulier d'au moins 15°, par rapport à un tracé perpendiculaire à l'axe longitudinal (X-X) de la bague.
